# NEUE EUROPÄISCHE PATENTSCHRIFT

(11) **EP 1 004 066 B2**
(45) Veröffentlichungstag und Bekanntmachung des Hinweises auf die Entscheidung über den Einspruch: **05.11.2008**
(45) Hinweis auf die Patenterteilung: 06.03.2002
(21) Anmeldenummer: 98947339.2
(22) Anmeldetag: 25.07.1998
(51) Int. Cl.: G05D 16/20

(54) **ELEKTROMAGNETISCHES DRUCKREGELVENTIL**
ELECTROMAGNETIC HYDRAULIC VALVE
SOUPAPE HYDRAULIQUE ELECTROMAGNETIQUE

(30) Priorität: 04.08.1997 DE 19733660
(43) Veröffentlichungstag der Anmeldung: 31.05.2000
(73) Patentinhaber: ROBERT BOSCH GMBH, 70442 Stuttgart (DE)
(72) Erfinder: SCHMID, Werner, D-71732 Tamm (DE); SCHUURMAN, Raymond, D-71701 Schwieberdingen (DE); OTT, Christof, D-71679 Asperg (DE)
(86) Internationale Anmeldenummer: PCT/DE1998/002098
(87) Internationale Veröffentlichungsnummer: WO 1999/008169

(56) Entgegenhaltungen:
- DE-A- 4 337 763
- DE-A1- 3 503 785
- DE-C2- 3 722 344
- DE-U- 9 202 519
- GB-A- 2 008 721
- US-A- 4 662 605
- PATENT ABSTRACTS OF JAPAN vol. 6, no. 193 (M-160), 2. Oktober 1982 & JP 57 101174 A (TOYODA AUTOM LOOM WORKS), 23. Juni 1982
- ROBERT BOSCH GMBH: 'Technisch-wissenschaftliche Mitteilungen aus Forschung, Entwicklung und Fertigung der Bosch-Gruppe' BOSCH TECHNISCHE BERICHTE Bd. 7, Nr. 4, November 1983, STUTTGART, GERMANY, ISSN 0006-789X Seite 164
- 'Wegeventile, Kapitel 2.3.1' DUBBEL INTERAKTIV 2.0 2002, SPRINGER VERLAG, BERLIN, HEIDELBERG, NEW YORK,

## Beschreibung

### Stand der Technik

Die Erfindung geht von einem elektromagnetischen Druckregelventil entsprechend der Gattung des Anspruchs 1 aus. Ein derartiges Druckregelventil ist beispielsweise aus der DE 43 42 591 A1 bereits bekannt. Dieses Druckregelventil weist in seinem Gehäuse einen beweglich geführten Ventilschieber auf, der elektromagnetisch in seiner Position verstellbar ist. Die momentane Regelposition des Ventilschiebers ist durch eine entsprechende Bestromung einer Magnetspule stetig veränderbar. Für eine anwendungsgerechte Funktion dieses Druckregelventils ist eine hohe Präzision bei der Herstellung des Ventilschiebers und seiner Schieberführung erforderlich. Von dieser hängen maßgeblich die Dichtheit des Druckregelventils und dessen Herstellungskosten ab. Zudem erfordert der Ventilschieber aufgrund seiner verhältnismäßig großen, wirksamen Druckflächen eine relativ hohe Betätigungskraft.

Aus der DE 43 37 763 A1 ist ferner ein als Druckregelventil bezeichnetes, aber entgegen dem Erfindungsgegenstand als Schaltventil wirkendes, Ventil bekannt, dessen Ventilteil mit zwei Sitzventilen ausgestattet ist. Eines der Ventilglieder der beiden Sitzventile ist als Kegel ausgebildet und bedingt daher eine genaue und teuer realisierbare konzentrische Anordnung zu seinem Ventilsitz. Dieses bekannte Ventil ist im Unterschied zum Erfindungsgegenstand in drei definierte Schaltstellungen verbringbar und vermag deshalb am Verbraucher keine vom Stromfluß zur Magnetspule abhängige, stetig verlaufende Druckregelkennlinie zu erzeugen.

Aus der DE 3503785 A1 ist ein Magnetventil für hydraulische Steuerungen mit einem durch den Magnetanker im Ventilgehäuse entgegen einer Rückstellkraft bewegbaren Stößel bekannt. Der Stößel trägt ein kegelförmiges Verschlussstück für einen ersten Ventilsitz und betätigt mit einem stirnseitigen Ende ein kugelförmiges Verschlussstück für einen zweiten Ventilsitz.

Weiterhin ist aus der DE 37 22 344 C2 ein 3/2-Mehrwegmagnetventil bekannt, das zwei im Abstand übereinander angeordnete Ventilsitze aufweist, denen als Kugel ausgebildete Verschlussstücke zugeordnet sind, die durch einen von einem Magnetanker entgegen einer Rückstellkraft axial verschieblichen Stößel mit gegenseitiger Wechselwirkung betätigbar sind."

### Vorteile der Erfindung

Demgegenüber weist das erfindungsgemäße elektromagnetische Druckregelventil mit den Merkmalen des Anspruchs 1 den Vorteil auf, daß es bei geringeren Genauigkeitsanforderungen an seine Einzelbauteile eine verhältnismäßig hohe Dichtheit, insbesondere in seinen Endstellungen, gewährleistet. Dadurch lassen sich bei verminderten Herstellkosten die Funktionseigenschaften, u.a. eine unerwünschte Leckage, verbessern. Durch eine Ausführung der Ventilglieder in Sitzbauweise wird erreicht, daß sich das Druckregelventil relativ unempfindlich gegenüber Koaxialitätsabweichungen und einem Blockieren infolge von Schmutzpartikeln aus dem Druckmittel verhält. Das Druckregelventil weist einen zu geringen Drücken hin erweiterten Betriebsbereich mit einer stetig verlaufenden Duckregelkennlinie auf und erfordert relativ kleine magnetische Betätigungskräfte.

Dadurch, dass die hydraulisch wirksame Druckfläche des ersten Sitzventils mit der hydraulisch wirksamen Druckfläche des zweiten Sitzventils ein Verhältnis bildet, dass kleiner als 0,3 ist, wird vorteilhaft erreicht, daß die Schließkraft des dem Magnetteil zugewandten zweiten Sitzventils größer als die Öffnungskraft des davon abgewandten ersten Sitzventils ist. Der am Verbraucher eingeregelte Druck, dessen Druckkraft auf den Ventilschieber mit der Kraft des Magnetkreises im Gleichgewicht steht, ist dadurch maßgeblich von der Genauigkeit des ersten Sitzventils abhängig. Das zweite Sitzventil kann aus Kostengründen mit geringerer Genauigkeit ausgeführt werden. Des weiteren übernimmt die Bohrung des zweiten Sitzventils bereits bei geringen Teilen des Gesamthubs des Ventilglieds ihre volle Drosselfunktion. Diese ist wesentlich von der Fertigungstoleranz der Bohrung und nicht vom Öffnungshub abhängig. Eng tolerierte Bohrungen sind preisgünstig herstellbar. Bei niedrigen Kosten läßt sich dadurch der Regeldruck des Druckregelventils bis zu geringsten Druckbereichen hin besonders genau einstellen. Flachsitzventile zeichnen sich insbesondere durch gute Dichteigenschaften bei gleichzeitig relativ geringen Anforderungen an die konzentrische Anordnung des Ventilglieds zum Ventilsitz aus.

### Zeichnung

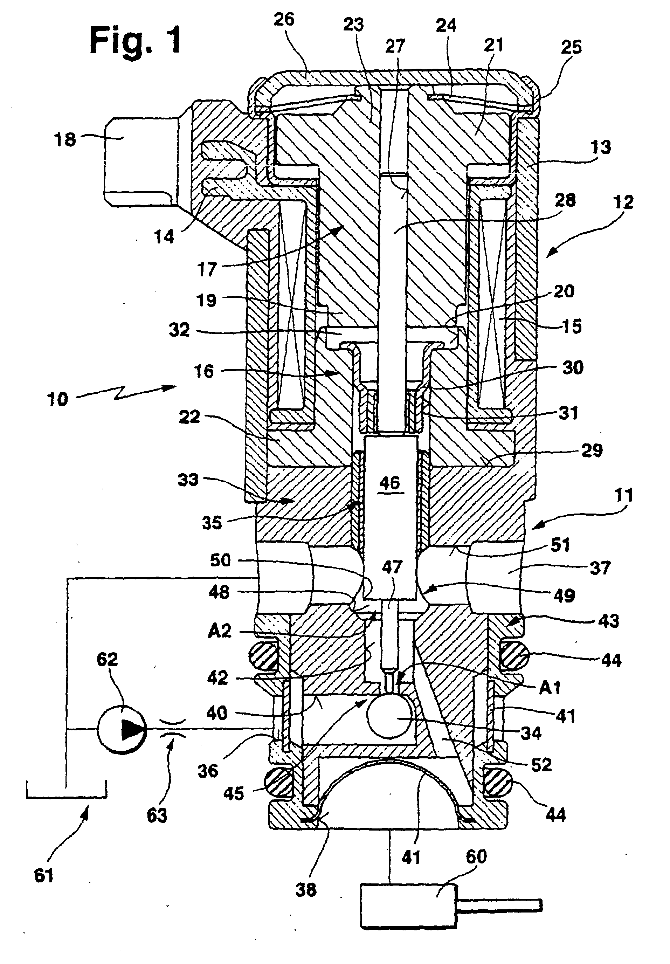

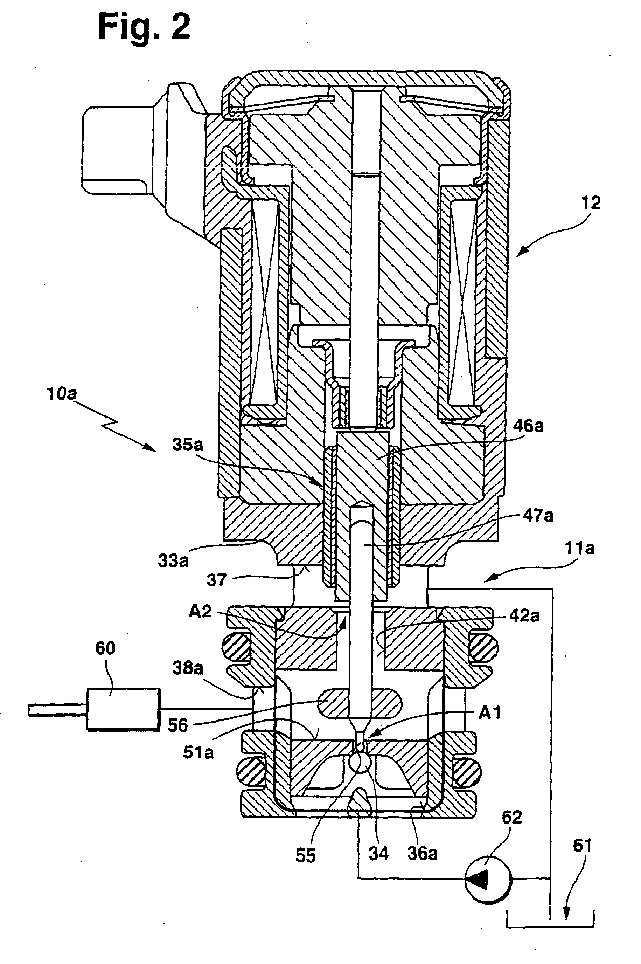

Zwei Ausführungsbeispiele der Erfindung sind in der Zeichnung dargestellt und in der nachfolgenden Beschreibung näher erläutert. Die Figur 1 zeigt ein erstes Ausführungsbeispiel im Längsschnitt, ein zweites Ausführungsbeispiel ist in Figur 2 ebenfalls im Längsschnitt dargestellt.

### Beschreibung der Ausführungsbeispiele

Das in der Figur 1 dargestellte erste Ausführungsbeispiel eines elektromagnetischen Druckregelventils 10 besteht aus einem Ventilteil 11 und einem koaxial dazu angeordneten Magnetteil 12. Das Magnetteil 12 ist von einem hülsenförmigen Gehäuse 13 umschlossen und wird von einer auf einen Spulenkörper 14 gewickelten Spule 15, einem in das Innere der Spule 15 hineinragenden Spulenkern 16 und einem im Spulenkörper 14 beweglich geführten Anker 17 gebildet. Beim Spulenkörper 14 handelt es sich um ein Bauteil, das nach dem Wickeln der Spule 15 u.a. zur Ausbildung eines Steckergehäuses 18 kunststoffumspritzt ist. Über im Steckergehäuse 18 eingespritze, zeichnerisch nicht dargestellte, Kontaktstifte und Leitungen erfolgt eine Spannungsversorgung der Spule 15. Der Spulenkern 16 ist an dem dem Ventilteil 11 zugewandten ersten Ende der Spule 15 plaziert, während sich der Anker 17 am dazu gegenüberliegenden zweiten Ende der Spule 15 befindet. Zur Ausbildung einer Tauchstufe des Magnetteils 12 weist der Anker 17 an seiner dem Spulenkern 16 zugewandten Stirnseite einen im Außendurchmesser abgesetzten Vorsprung 19 auf. Dieser Vorsprung 19 ist auf eine Ausformung 20 des Spulenkörpers 16 abgestimmt, so daß der Anker 17 zumindest abschnittsweise in den Spulenkörper 16 eintauchen kann. Desweiteren sind der Spulenkern 16 und der Anker 17 im wesentlichen zylindrisch ausgeführt und haben jeweils einen die Spule 15 stirnseitig überdeckenden Bund 21, 22. Im Falle des Ankers 17 schließt sich in axialer Richtung an den Bund 21 ein kegelstumpfförmig geformter Fortsatz 23 an, an dem eine Membranfeder 24, die der Lagerung des Ankers 17 dient, befestigt ist. Diese Membranfeder 24 überragt umfangsseitig den Anker 17 und stützt sich mit ihrem äußeren Rand auf einer Anlagefläche eines Halteelements 25 ab, das am Spulenkörper 14 zentriert ist. Das Halteelement 25 hat einen umlaufenden Kragen, der zur Lagefixierung eines Deckels 26, der das Druckregelventil 10 nach außen verschließt, umgebördelt ist.

Der Anker 17 weist entlang seiner Längsachse eine durchgehende Aufnahmebohrung 27 auf, in die ein Stellkolben 28 abschnittsweise eingepreßt ist. Der Stellkolben 28 erstreckt sich bis über das spulenkernseitige Ende des Ankers 17 hinaus und wird am freien Ende von einer Führungshülse 30 geführt. Diese Führungshülse 30 ist in einer koaxial zur Aufnahmebohrung 27 des Ankers 17 verlaufenden Ausnehmung 31 des Spulenkerns 16 eingesetzt.

Zwischen dem Anker 17 und dem Spulenkern 16 besteht in axialer Richtung ein Arbeitsspalt 32.

In der nicht bestromten Ruhestellung des Magnetteils 12 schließt das freie Ende des Stellkolbens 28 bündig mit der dem Ventilteil 11 zugewandten Stirnfläche der Führungshülse 30 ab, wobei diese Führungshülse 30 gegenüber einer vom Spulenkern 16 gebildeten Flanschfläche 29 für das Ventilteil 11 zurückgesetzt ist. Dieses Ventilteil 11 ist mit dem Magnetteil 12 verbunden und stellt den hydraulischen Teil des Druckregelventils 10 dar. Das Ventilteil 11 besteht aus einem Anschlußstutzten 33, einem Schließglied 34 und einem Betätigungsglied 35. Der Anschlußstutzen 33 weist einen Zulauf 36, einen Rücklauf 37 und einen Verbraucherkanal 38 auf. Der Zulaufkanal 36 ist als umfangsseitiger Ringkanal ausgebildet, der auf der vom Magnetteil 12 abgewandten Seite des Ventilteils 11 angeordnet ist. Der Ringkanal des Zulaufs 36 setzt sich in einem radial zur Längsachse des Druckregelventils 10 geführten Stichkanal 40 fort. Dieser Stichkanal 40 ist sacklochartig ausgeführt und endet im Bereich kurz hinter der Längsachse des Druckregelventils 10, wo er mit einer zentrisch im Anschlußstutzen 33 verlaufenden Steuerbohrung 42 zusammentrifft, die an dieser Stelle endet. Diese Steuerbohrung 42 fluchtet mit der Ausnehmung 31 des Magnetteils 12. Um Verschmutzungen aus dem Innenraum des Druckregelventils 10 fernzuhalten, ist auf das Ventilteil 11 ein topfförmiger Filterkäfig 43 aufgesteckt, in den ein abschnittsweise freiliegendes Filtergewebe 41 eingespritzt ist. Eine Abdichtung des Zulaufs 36 erfolgt mittels konventionellen Dichtringen 44, die in Längsrichtung des Ventilteils 11 oberhalb und unterhalb des Zulaufs 36 in dafür vorgesehenen Nuten des Filterkäfigs 43 eingesetzt sind.

Am inneren Ende des sacklochartigen Stichkanals 40 befindet sich das in Form einer Kugel ausgeführte Schließglied 34 des Ventilteils 11. Dieses Schließglied 34 wird durch den Druck im Zulauf 36 auf einen Ventilsitz gepreßt und wirkt dadurch als zulaufseitiges erstes Sitzventil 45. Das erste Sitzventil 45 ist an der Stelle der Einmündung der Steuerbohrung 42 in den Stichkanal 40 ausgebildet. Ein Druckmittelfluß vom Zulauf 36 zur Steuerbohrung 42 ist im dargestellten Ruhezustand des Sitzventils 45 gesperrt. Das Schließglied 34 steht in Wirkverbindung mit einem Betätigungsglied 35, das in dem dem Magnetteil 12 zugewandten Endabschnitt der Steuerbohrung 42 beweglich geführt und zum Magnetteil 12 hin abgedichtet ist. Das Betätigungsglied 35 hat einen Schaft 46, an den sich in Richtung des Ventilteils 11 ein Stößel 47 anschließt. Dieser Stößel 47 liegt mit seinem stirnseitigen Ende im nicht bestromten Zustand des Magnetteils 12 kräftefrei am Schließglied 34 an. Ein exemplarisch rechtwinklig ausgeführter Übergang vom Schaft 46 zum Stößel 47 bildet am Betätigungsglied 35 eine Steuerkante 50 aus. Diese Steuerkante 50 liegt etwa auf der Höhe einer Querbohrung 51, die das Ventilteil 11 und dessen Steuerbohrung 42 in radialer Richtung durchdringt. Die Querbohrung 51 endet in einem den Rücklauf 37 bildenden Ringkanal. An der Kreuzungsstelle zwischen der Steuerbohrung 42 und der Querbohrung 51 ist auf der dem Zulauf 36 zugewandten Seite an der Steuerbohrung 42 eine konzentrische Absenkung 48, die einen größeren Außendurchmesser als die Steuerbohrung 42 hat, ausgebildet. Diese Absenkung 48 bildet mit der Steuerkante 50 ein rücklaufseitiges zweites Sitzventil 49 aus, das im gezeichneten Ruhezustand des Magnetteils 12 geöffnet ist. In diesem Zustand wirkt die Steuerkante 50 zusammen mit den Wandungen der Querbohrung 51, der Absenkung 48 und der Steuerbohrung 42 als Drossel, die das Druckniveau am Verbraucheranschluß 38 regelt. Hierzu ist der Verbraucherkanal 38 durch einen Bypaß 52 zum Schließglied 34 mit der Steuerbohrung 42 verbunden. Der Verbraucherkanal 38 ist gegenüberliegend zum Magnetteil 12 am stirnseitigen Ende des Druckregelventils 10 angeordnet und wird durch das Filtergewebe 41 des Filterkäfigs 43 vor Verunreinigungen geschützt.

Die Funktionsweise des erfindungsgemäßen Druckregelventils erklärt sich, indem der nichtbestromte Ruhezustand des Magnetkreises 12 getrennt vom bestromten Zustand desselben betrachtet wird.

Im nichtbestromten Ruhezustand befindet sich, wie bereits beschrieben, das Schließglied 34 auf seinem Ventilsitz und sperrt damit den Druckmittelstrom durch den Zulauf 36 ab. In diesem Zustand besteht zwischen dem Verbraucherkanal 38 und dem Rücklauf 37 eine direkte Verbindung über den Bypaß 52, so daß Druckmittel von einem am Verbraucherkanal 38 angeschlossenen Verbraucher 60 zu einem mit dem Rücklauf 37 verbundenen Tank 61 abströmen kann. Dabei befindet sich die Steuerkante 50 in einer Position, in der v sie keine Drosselfunktion ausübt, so daß am Verbraucherkanal 38 der Druck des Rücklaufs 37 herrscht.

Demgegenüber wird das Schließglied 34 im bestromten Zustand der Spule 15 durch die Auslenkbewegung des Ankers 17 und des Betätigungsglieds 35 in seine Offenstellung verbracht. Druckmittel strömt demzufolge von einem mit dem Zulauf 36 verbundenen Druckerzeuger 62 in die Steuerbohrung 42 ein und teilt sich in einen Teilstrom zum Verbraucherkanal 38 und zum Rücklauf 37 hin auf. Das Betätigungsglied 35 hat sich dabei mit seiner Steuerkante 50 dem Ventilsitz des zweiten Sitzventils 49 angenähert, so daß die Steuerkante 50 den vom Zulauf 36 zum Rücklauf 37 fließenden Teilstrom drosselt.

Durch eine Drossel 63, die dem mit dem Zulauf 36 verbundenen Druckerzeuger 62 nachgeschlaltet ist, lassen sich Betriebszustände einregeln, in denen der Druck im Verbraucherkanal 38 kleiner als der des Zulaufs 36 ist. Durch die Höhe des Stromflusses zur Magnetspule 15 kann das Maß der dem Anker 17 und damit dem Betätigungsglied 35 erteilten Auslenkbewegung elektrisch verändert werden, wodurch sich die Drosselwirkung der Steuerkante 50 und die Druckverhältnisse am Verbraucheranschluß 38 anwendungsspezifisch regeln lassen. Maßgeblich für eine auch in niedrigen Druckbereichen stetig verlaufende Kennlinie des beschriebenen Druckregelventils 10 ist, daß die druckbeaufschlagte Fläche A1 des ersten zulaufseitigen Sitzventils 45 mit der entsprechenden Fläche A2 des zweiten Sitzventils 49 ein Verhältnis bildet, das kleiner als 0,3 ist. Eine Rückstellung der dem Anker 17 bzw. dem Betätigungsglied 35 erteilten Auslenkbewegung erfolgt im nichtbestromten Zustand der Spule 15 durch den hydraulischen Druck im Zulauf 36.

Das in Figur 2 dargestellte zweite Ausführungsbeispiel eines Druckregelventils 10a unterscheidet sich durch einen modifizierten Aufbau des Ventilteils 11a vom ersten Ausführungsbeispiel. Abgeänderte Bauteile des zweiten Ausführungsbeispiels sind im Folgenden durch den Index a gekennzeichnet, während für identische Bauteile die Positionsnummern der Figur 1 übernommen wurden.

Einer der Unterschiede des Ventilteils 11a ist, daß die Position des Zulaufs 36a und des Verbraucherkanals 38a gegeneinander vertauscht wurden. Dementsprechend befindet sich der mit einem Druckerzeuger 62 gekoppelte Zulauf 36a nun am stirnseitigen Ende des Ventilteils 11a, während der mit einem hydraulischen Verbraucher 60 verbundene Verbraucherkanal 38a als Ringkanal ausgebildet ist, der in eine Querbohrung 51a einmündet. Die Anordnung des mit einem Tank 61 verbundenen Rücklaufs 37 blieb unverändert auf der dem Magnetteil 12 zugewandten Seite des Ventilteils 11a. Eine Verbindung zwischen dem Zulauf 36a und dem Verbraucherkanal 38a erfolgt durch eine Axialbohrung 55. Diese Axialbohrung 55 ist im gezeichneten, nicht bestromten Zustand des Magnetteils 12 vom Schließglied 34 verschlossen. In diesem Zustand besteht zwischen dem Rücklauf 37 und dem Verbraucherkanal 38a eine ungedrosselte Druckmittelverbindung. Die Betätigung des Schließglieds 34 erfolgt identisch zum ersten Ausführungsbeispiel durch das die Steuerbohrung 42a durchdringende Betätigungsglied 35a, das im zweiten Ausführungsbeispiel jedoch zweiteilig ausgebildet ist und aus einem Schaft 46a und einem darin eingepreßten Stößel 47a besteht. Um eine bessere Führung und Zentrierung des Betätigungsglieds 35a zu erreichen, ragt in die Querbohrung 51a eine ösenartig ausgebildete Konsole 56, die den Stößel 47a des Betätigungsglieds 35a führt und die nicht erkennbar mit dem Anschlußstutzen 33a verbunden ist. Die Konsole 56 ist zentrisch in der Querbohrung 51a angeordnet und wird allseitig von Druckmittel umströmt. Im geöffneten Zustand des Schließglieds 34 wirkt die Axialbohrung 55 als Drossel für den mit dem Zulauf 36a gekoppelten Druckerzeuger 62, so daß auf eine extern angeordnete Drossel für den Druckerzeuger 62 verzichtet werden kann. Das zweite Ausführungsbeispiel kommt ohne einen aufwendig herzustellenden, weil diagonal im Ventilteil 11 verlaufenden Bypaß 52 aus und ermöglicht die Ausbildung einer zweiten Führungsstelle für das Betätigungsglied 35a in Form der Konsole 56. Des weiteren ist die Drossel 63 für den zulaufseitigen Druckerzeuger 62 in das Druckregelventil 10 integriert und die Anschlüsse des Druckregelventils 10a sind in Bezug auf die Einsatzbedingungen beim Kunden günstiger plaziert.

Selbstverständlich sind weitere Änderungen oder Ergänzungen an den Ausführungsbeispielen möglich, ohne vom Grundgedanken der Erfindung abzuweichen. Diesbezüglich erwähnenswert ist, daß das Druckregelventil 10 neben der beschriebenen Ausführung als Öffner, d.h. eine Bestromung der Spule 15 bewirkt das Öffnen des Schließglieds 34, auch als Schließer ausgebildet werden kann. Bei Schließern ist im Unterschied zum beschriebenen Magnetteil 12 im wesentlichen die Anordnung von Spulenkern 16 und Anker 17 vertauscht. Der Anker 17 wird dadurch beim Bestromen der Spule 15 entgegen der Kraft einer Druckfeder derart bewegt, daß sich das Schließelement 34 in seine Schließstellung verstellt.

## Patentansprüche

1. Elektromagnetisches Druckregelventil (10, 10a), mit einem Magnetteil (12) aus wenigstens einer elektrisch ansteuerbaren Spule (15), einem Spulenkern (16) und einem verschiebbar geführten Anker (17), mit einem Ventilteil (11, 11a), das einen Zulauf (36, 36a), einen Rücklauf (37), einen Verbraucheranschluss (38, 38a) und ein mit dem Anker (17) zusammenwirkendes Ventilelement (34, 35, 35a) aufweist, **dadurch gekennzeichnet, dass** das Ventilteil (11, 11a) ein erstes Sitzventil (45) mit einem Schließglied (34) ausbildet und ein zwischen den Anker (17) und das Schließglied (34) geschaltetes Betätigungsglied (35, 35a) aufweist, und dass das Betätigungsglied (35, 35a) eine Steuerbohrung (42, 42a) des Ventilteils (11, 11a) durchdringt und eine Steuerkante (50) aufweist, die in Wirkverbindung mit der Steuerbohrung (42) ein zweites Sitzventil (49) ausbildet, wobei die hydraulisch wirksame Druckfläche (A1) des ersten Sitzventils (45) mit der hydraulisch wirksamen Druckfläche (A2) des zweiten Sitzventils (49) ein Verhältnis bildet, das kleiner als 0,3 ist.

2. Elektromagnetisches Druckregelventil (10, 10a) nach Anspruch 1, **dadurch gekennzeichnet, dass** das Magnetteil (12) eine Tauchstufe in Form eines wenigstens abschnittsweise in den Spulenkern (16) eintauchenden Ankers (17) ausbildet.

3. Elektromagnetisches Druckregelventil (10, 10a) nach einem der Ansprüche 1 oder 2, **dadurch gekennzeichnet, dass** das Betätigungsglied (35, 35a) einen Schaft (46, 46a) und einen Stößel (47, 47a) aufweist, dass die Steuerkante (50) des Betätigungsglieds (35, 35a) an der Übergangsstelle vom Schaft (46, 46a) zum Stößel (47, 47a) ausgebildet ist, und dass die Steuerkante (50) in der geöffneten Endstellung des zweiten Sitzventils (49) keine Drosselwirkung hat.

4. Elektromagnetisches Druckregelventil (10, 10a) nach einem der Ansprüche 1 bis 3, **dadurch gekennzeichnet, dass** das Betätigungsglied (35, 35a) in der Regelstellung des Druckregelventils (10) das Schließglied (34) von seinem Sitz abhebt, und dass die Steuerkante (50) des Betätigungsglieds (35, 35a) in dieser Regelstellung den vom Zulauf (36, 36a) zum Rücklauf (37) strömenden Druckmittelstrom drosselt.

5. Elektromagnetisches Druckregelventil (10, 10a) nach einem der Ansprüche 1 bis 4, **dadurch gekennzeichnet, dass** das erste Sitzventil (45) im Zulauf (36, 36a) des Ventilteils (11, 11a) angeordnet ist.

6. Elektromagnetisches Druckregelventil (10) nach einem der Ansprüche 1 bis 5, **dadurch gekennzeichnet, dass** der Verbraucherkanal (38) am stirnseitigen Ende des Ventilteils (11) angeordnet ist und über einen Bypaß (52) zum Zulauf (36) mit dem Rücklauf (37) verbunden ist, und dass der Bypaß (52) in Strömungsrichtung des Druckmittels im Bereich vor der Steuerkante (50) in den Steuerkanal (42) einmündet.

7. Elektromagnetisches Druckregelventil (10) nach Anspruch 6, **dadurch gekennzeichnet, dass** der Zulauf (36) und der Rücklauf (37) seitlich vom Steuerkanal (42) abzweigen.

8. Elektromagnetisches Druckregelventil (10a) nach einem der Ansprüche 1 bis 5, **dadurch gekennzeichnet, dass** der Zulauf (36a) am stirnseitigen Ende des Ventilteils (11a) angeordnet ist, und dass der Verbraucherkanal (38a) und der Rücklauf (37) seitlich vom Steuerkanal (42a) abzweigen.

9. Elektromagnetisches Druckregelventil (10a) nach Anspruch 8, **dadurch gekennzeichnet, dass** der Zulauf (36a) und die Steuerbohrung (42a) in eine Querbohrung (51a) einmünden, die in den Arbeitsanschluss (38a) übergeht, und dass in dieser Querbohrung (51a) eine Konsole (56) ausgebildet ist, die allseitig vom Druckmittel umströmt ist und die eine Führung für das Betätigungsglied (35a) ausbildet.

## Claims

1. Electromagnetic pressure-regulating valve (10, 10a), having a magnet component (12) composed of at least one coil (15) which can be actuated electrically, one coil former (16) and a displaceably guided armature (17), having a valve component (11, 11a) which has an inflow (36, 36a), a return flow (37), a consumer connection (38, 38a) and a valve element (34, 35, 35a) which interacts with the armature (17), **characterized in that** the valve component (11, 11a) forms a first seat valve (45) with a closing element (34) and has an activation element (35, 35a) which is connected between the armature (17) and the closing element (34), and **in that** the activation element (35, 35a) penetrates a control bore (42, 42a) of the valve component (11, 11a) and has a control edge (50) which forms a second seat valve (49) through an operative connection to the control bore (42), wherein the hydraulically active pressure area (A1) of the first seat valve (45) forms, with the hydraulically active pressure area (A2) of the second seat valve (49), a ratio which is less than 0.3.

2. Electromagnetic pressure-regulating valve (10, 10a) according to Claim 1, **characterized in that** the magnet component (12) forms a plunger stage in the form of an armature (17) which dips at least partially into the coil former (16).

3. Electromagnetic pressure-regulating valve (10, 10a) according to one of Claims 1 or 2, **characterized in that** the activation element (35, 35a) has a stem (46, 46a) and a plunger (47, 47a), **in that** the control edge (50) of the activation element (35, 35a) is formed at the junction point between the stem (46, 46a) and the plunger (47, 47a), and **in that** the control edge (50) does not have any throttling effect in the opened end position of the second seat valve (49).

4. Electromagnetic pressure-regulating valve (10, 10a) according to one of Claims 1 to 3, **characterized in that** the activation element (35, 35a) lifts off the closing element (34) from its seat in the regulating position of the pressure-regulating valve (10), and **in that** in this regulating position the control edge (50) of the activation element (35, 35a) throttles the flow of pressure medium flowing from the inflow (36, 36a) to the return flow (37).

5. Electromagnetic pressure-regulating valve (10, 10a) according to one of Claims 1 to 4, **characterized in that** the first seat valve (45) is arranged in the inflow (36, 36a) of the valve component (11, 11a).

6. Electromagnetic pressure-regulating valve (10) according to one of Claims 1 to 5, **characterized in that** the consumer duct (38) is arranged at the front end of the valve component (11) and is connected to the return flow (37) via a bypass (52) to the inflow (36), and **in that** the bypass (52) opens into the control duct (42) in the region upstream of the control edge (50) in the direction of flow of the pressure medium.

7. Electromagnetic pressure-regulating valve (10) according to Claim 6, **characterized in that** the inflow (36) and the return flow (37) branch off laterally from the control duct (42).

8. Electromagnetic pressure-regulating valve (10a) according to one of Claims 1 to 5, **characterized in that** the inflow (36a) is arranged at the front end of the valve component (11a), and **in that** the consumer duct (38a) and the return flow (37) branch off laterally from the control duct (42a).

9. Electromagnetic pressure-regulating valve (10a) according to Claim 8, **characterized in that** the inflow (36a) and the control bore (42a) open into a transverse bore (51a) which merges with the working connection (38a), and **in that** in this transverse bore (51a) a bracket (56), around which the pressure medium flows on all sides, is formed, and said bracket (56) forms a guide for the activation element (35a).

## Revendications

1. Soupape électromagnétique de régulation de pression (10, 10a) comprenant une partie magnétique (12) composée d'au moins une bobine (15) à commande électrique, d'un noyau de bobine (16) et d'un induit coulissant (17), et une partie à soupape (11, 11a) composée d'une entrée (36, 36a), d'un retour (37), d'un raccord d'utilisation (38, 38a) et d'un élément de soupape (34, 35, 35a) coopérant avec l'induit (17),
**caractérisée en ce que**
la partie à soupape (11, 11a) présente une première soupape à siège (45) équipé d'un organe de fermeture (34), ainsi qu'un organe de manoeuvre (35, 35a) monté entre l'induit (17) et l'organe de fermeture (34), cet organe de manoeuvre (35, 35a) traversant un alésage de commande (42, 42a) de la partie à soupape (11, 11a) et présentant un bord de commande (50) constitué pour coopérer activement avec l'alésage de commande (42) d'une seconde soupape à siège (49),
**caractérisée en ce que**
la surface effectivement sous pression hydraulique (A1) de la première soupape à siège (45) est, par rapport à la surface effectivement sous pression hydraulique (A2) de la seconde soupape à siège (49), dans un rapport inférieur à 0,3.

2. Soupape électromagnétique (10, 10a) selon la revendications 1,
**caractérisée en ce que**
la partie magnétique (12) présente un étage de plongée se présentant sous la forme d'un induit (17) plongeant au moins en partie dans le noyau de bobine (16).

3. Soupape électromagnétique (10, 10a) selon l'une des revendications 1 ou 2,
**caractérisée en ce que**
l'organe de manoeuvre (35, 35a) présente une tige (46, 46a) et un poussoir (47, 47a), son bord de commande (50) étant constitué le long de la zone de transition entre la tige (46, 46a) et le poussoir (47, 47a), et le bord de commande (50) n'ayant aucun effet d'étranglement quand la seconde soupape à siège (49) est dans sa position extrême d'ouverture.

4. Soupape électromagnétique (10, 10a) selon l'une quelconque des revendications 1 à 3,
**caractérisée en ce que**
dans la position de régulation de la soupape de régulation de pression (10), l'organe de manoeuvre (35, 35a), soulève l'organe de fermeture (34) de son siège et, dans cette position de régulation, le bord de commande (50) de l'organe de manoeuvre (35, 35a) étrangle le courant de fluide sous pression allant de l'entrée (36, 36a) au retour (37).

5. Soupape électromagnétique (10, 10a) selon l'une des revendications 1 à 4,
**caractérisée en ce que**
la première soupape à siège (45) est montée à l'entrée (36, 36a) de la partie à soupape (11, 11a).

6. Soupape électromagnétique (10) selon l'une des revendications 1 à 5,
**caractérisée en ce que**
le canal d'utilisation (38) est disposé à l'extrémité frontale de la partie à soupape (11), et relié au retour (37) par un by-pass (52) contournant l'entrée (36), ce by-pass (52) débouchant, selon la direction d'écoulement du fluide sous pression, dans le canal de commande (42) en amont du bord de commande (50).

7. Soupape électromagnétique (10) selon la revendication 6,
**caractérisée en ce que**
l'entrée (36) et le retour (37) sont des dérivations latérales du canal de commande (42).

8. Soupape électromagnétique (10a) selon l'une des revendications 1 à 5,
**caractérisée en ce que**
l'entrée (36a) est disposée à l'extrémité frontale de la partie à soupape (11a), et le canal d'utilisation (38a) ainsi que le retour (37) sont dérivés latéralement sur le canal de commande (42a).

9. Soupape électromagnétique (10a) selon la revendication 8,
**caractérisée en ce que**
l'entrée (36a) et l'alésage de commande (42a) débouchent dans un perçage transversal (51a) qui se poursuit dans le raccord de travail (38a) tandis que, et dans le perçage (51a), est réalisée une console (56) entourée de tous côtés par le fluide sous pression et formant un guide de l'organe de manoeuvre (35a).
